# EUROPÄISCHE PATENTANMELDUNG

(11) **EP 1 312 531 A2**
(43) Veröffentlichungstag der Anmeldung: **21.05.2003**
(21) Anmeldenummer: 02023714.5
(22) Anmeldetag: 23.10.2002
(51) Int. Cl.: B62B 3/12, B62B 3/02, B62B 1/12

(54) **Transportwagen, insbesondere zum Transport von Stückgut**

(30) Priorität: 16.11.2001 DE 10156367
(71) Anmelder: Brüggli Produktion & Dienstleistung, 8590 Romanshorn 1 (CH)
(72) Erfinder: Hungerbühler, Adrian, 8580 Dozwil/TG (CH)
(74) Vertreter: Hertz, Oliver, Dr.

(57) **Zusammenfassung**

Es wird ein Transportwagen (100), insbesondere zum Transport von Stückgut, mit einem Träger (10) beschrieben, der eine Stückgutaufnahme bildet, an einem fahrbaren Rahmen (20) angebracht ist und von einem Ladezustand, in dem der Träger (10) horizontal ausgerichtet ist, in einen Transportzustand verschwenkbar ist, in dem der Träger (10) aus der Horizontalen verkippt angeordnet ist, wobei der Rahmen (20) mit einem Stützradausleger (30) ausgestattet ist, der im Ladezustand des Transportwagens vom Rahmen (20) absteht und eine Stütze bildet und im Transportzustand des Transportwagens an den Rahmen (20) angelegt ist.

## Beschreibung

Die Erfindung betrifft einen Transportwagen, insbesondere zum Transport von Stückgut oder Gegenständen, wie z. B. einen Transportwagen zum Wareneinkauf.

Beim Einkauf von Waren in einem Supermarkt werden vom Kunden Artikel aus einem Regal in einen Einkaufswagen und von diesem auf das Förderband einer Kasse gelegt. Nach Bezahlung folgt ein Umpacken erneut in den Einkaufswagen oder eine Tasche und von diesen ggf. in den Kofferraum eines Fahrzeugs, den Anhänger eines Fahrrads oder einen persönlichen Einkaufswagen. Dieser Vorgang ist zeitaufwendig und umständlich. Das häufige Umpacken kann sich auch nachteilig auf die eingekauften Artikel insbesondere bei zerbrechlichen oder empfindlichen Waren auswirken. Besondere Nachteile ergeben sich beim Einkauf von Lebensmitteln. Verderbliche, weiche oder flüssige Waren können beim mehrmaligen Umladen beschädigt werden. Tiefkühlprodukte können vorzeitig anoder aufgetaut werden.

Es sind Einkaufswagen zum persönlichen Gebrauch bekannt, die im Wesentlichen aus einer großen, festen Tasche bestehen, die auf einem Rahmen mit zwei Rädern und einem Griff befestigt ist. Diese sog. Ziehwagen oder Caddies können mit vertikal ausgerichteter Tasche frei aufgestellt oder im gekippten Zustand wie eine Karre von einer Person gezogen werden. Die herkömmlichen Ziehwagen können zwar den Heimweg nach dem Einkauf erleichtern, lösen jedoch nicht die oben genannten Probleme, da im Supermarkt immer noch ein Umpacken erforderlich ist. Außerdem ist das Beladen der Tasche mühselig, da diese für ein einfaches Ziehen tief gelegt ist und ein Bücken beim Einpacken erfordert.

Die genannten Probleme beim Transport von Gegenständen bestehen nicht nur beim Wareneinkauf. Beispielsweise besteht auch für einen Handwerker, der im Tagesverlauf an verschiedenen Einsatzorten tätig ist, ein Interesse am effektiven und schonenden Transport von Werkzeug und Materialien, bspw. vom Lager zu einem Fahrzeug und von diesem zum Auftraggeber. Ferner gibt es beim Betrieb mobiler Geräte, beispielsweise bei mobilen Messungen o. dgl., entsprechende Transportaufgaben, bei denen es darauf ankommt, den Transportwagen möglichst komfortabel und störungsfrei unter den verschiedensten Bedingungen zu manövrieren.

Die Aufgabe der Erfindung ist es, einen verbesserten Transportwagen, insbesondere zum Transport von Stückgut bereitzustellen, mit dem die Nachteile herkömmlicher Transportwagen überwunden werden, der einen erweiterten Einsatzbereich und eine verbesserte Manövrierbarkeit besitzt. Der erfindungsgemäße Transportwagen soll insbesondere ein häufiges Umladen der transportierten Gegenstände beim bestimmungsgemäßen Gebrauch vermeiden.

Diese Aufgabe wird durch einen Transportwagen mit den Merkmalen gemäß Patentanspruch 1 gelöst. Vorteilhafte Ausführungsformen der Erfindung ergeben sich aus den abhängigen Ansprüchen.

Die Grundidee der Erfindung ist es, einen Transportwagen, insbesondere zum Transport von Stückgut bereitzustellen, bei dem ein Träger zur Aufnahme von Gegenständen auf einem fahrbaren Rahmen verschwenkbar angebracht ist. Die Verschwenkbarkeit bedeutet, dass der Träger von einem Ladezustand, in dem der Träger horizontal oder geringfügig geneigt ausgerichtet ist, in einen Transportzustand aus der Horizontalen verkippt werden kann. Des Weiteren ist am Rahmen ein Stützradausleger verschwenkbar angebracht, der im Ladezustand vom Rahmen absteht und eine Stütze des Transportwagens bildet und im Transportzustand an den Rahmen angelegt ist. Durch diese Maßnahmen eignet sich der erfindungsgemäße Transportwagen vorteilhafterweise sowohl für ein komfortables Beladen bspw. in einem Markt oder einem Lager, als auch für einen leicht steuerbaren Transport zu einem Bestimmungsort oder mit einem Zusatzfahrzeug. Im Ladezustand besitzt der Transportwagen bspw. die Form eines fahrbaren Einkaufskorbes, wie er im Supermarkt verwendet wird. Ohne eine Gefährdung der vom Träger aufgenommenen Gegenstände ist ein Verschwenken in den Transportzustand möglich, in dem der erfindungsgemäße Transportwagen die Form eines Einkaufs-Ziehwagens oder Caddies besitzt.

Gemäß einer bevorzugten Ausführungsform der Erfindung ist der Träger (oder: Behälter, Transportgutaufnahme) auf mindestens einer Plattform oder einem Rahmen angebracht, die an der Unterseite vordere und hintere Plattformstützen aufweist, die auf der Innenseite des Rahmens angelenkt sind. Die Plattformstützen bilden vorteilhafterweise in den Lade- und Transportzuständen stabile Halterungen für die Plattform und beim Verschwenken zwischen den Lade- und Transportzuständen definierte Schwenkwege, auf denen ein Überschlag oder unbeabsichtigtes Entleeren des Trägers ausgeschlossen ist.

Gemäß einer besonders vorteilhaften Ausführungsform des erfindungsgemäßen Transportwagens bilden die Plattformstützen und der Stützradausleger eine Synchronmechanik. Das Verschwenken des Trägers und das Anlegen oder Ausstellen des Stützradauslegers erfolgen gleichzeitig. Die vorderen Plattformstützen und der Stützradausleger bilden zwei starre, an der Innenseite des Rahmens angelenkte Bauteile, die im Ladezustand beidseitig aus der Ebene des Rahmens herausragen, um einerseits die Plattform und andererseits den Transportwagen zu stützen, und im Transportzustand in die Ebene des Rahmens verschwenkt sind. Durch dieses Merkmal wird die Stabilität des Transportwagens verbessert und die Bedienbarkeit erleichtert.

Gemäß weiteren wichtigen Merkmalen ist der Träger lösbar an der Plattform befestigt. Der Träger besitzt vorzugsweise einen modularen Aufbau, um den Transportwagen für die verschiedensten Aufgaben beim Stückguttransport oder anderweitigen Transportaufgaben anzupassen. Der Träger besitzt mindestens eine starre Bodenoder Seitenwand, an der vorteilhafterweise eine Steuereinrichtung angebracht sein kann. Die Steuereinrichtung enthält beispielsweise einen Transponder zur Identifizierung des Transportwagens, Datenspeicher zur Aufnahme von charakteristischen Daten des auf dem Träger befindlichen Stückgutes und/oder Anzeigeeinrichtungen. Am fahrbaren Rahmen sind zur Erfüllung der genannten Ziehwagenfunktion im Transportzustand zwei Räder vorgesehen. Die Räder sind vorzugsweise mit Kugellagern befestigt, wodurch der Fahrkomfort positiv beeinflusst und die Überwindung von kleinen Hindernissen (z. B. Treppen, Gehwegstufen) vereinfacht wird.

Gemäß einem besonders bevorzugten Gesichtspunkt der Erfindung wird der Transportwagen zum Einkauf von Waren im Einzelhandel verwendet. Durch diese Verwendung werden die o. g. Umpackvorgänge reduziert oder ausgeschlossen. Die Waren, insbesondere Lebensmittel werden geschont und der Einkauf beschleunigt.

Die Erfindung besitzt die folgenden weiteren Vorteile. Der erfindungsgemäße Transportwagen besitzt ein geringes Eigengewicht. Er ist problemlos auch in engen Raumverhältnissen, wie z. B. in Küchen, Kellern, Garagen oder anderen kleinen Räumen manövrierfähig und transportierbar. Die modulare Bauweise, insbesondere des Trägers auf der Plattform ermöglicht eine individuelle Anpassung der Gestaltung und der Funktion des Transportwagens an die Bedürfnisse des Nutzers. Der erfindungsgemäße Transportwagen kann problemlos in ein Fahrzeug geladen oder an ein Zugfahrzeug, z. B. Fahrrad angehängt werden. Damit wird der Transport der Gegenstände zum Bestimmungsort vereinfacht.

Der erfindungsgemäße Transportwagen besitzt eine hohe Standstabilität sowohl im Ladezustand als auch bei vertikaler Ausrichtung des Rahmens im Transportzustand (freistehender Caddie). Die hohe Betriebssicherheit ist insbesondere wegen der Benutzung im öffentlichen Raum, z. B. in Bussen oder Bahnen von großem Vorteil. Der Transportwagen ist variabel einsetzbar, leicht und einfach bedienbar, bequem, robust, langlebig und mit einer hohen Funktionalität ausgestattet. Es besteht die Möglichkeit, den Transportwagen für den Kindertransport einzurichten (Baby-Schale oder separates Trittbrett) oder als Fahrradanhänger zu verwenden. Es können auch Sicherheitsmaßnahmen, wie z. B. eine Beleuchtung, ein Rückstrahler oder eine Diebstahlsicherung vorgesehen sein.

Besondere Vorteile ergeben sich bei Integration des Transportwagens in neue Verkaufskonzepte, wie z. B. in ein SNS (Shopping Navigation System). Am Träger kann eine Anzeige vorgesehen sein, auf die drahtlos vom Markt an den Kunden Angebote, Wareneigenschaften (Gewicht) oder weitere Produktinformationen übermittelt werden können. Auf der Anzeige können bspw. auch Produktinformationen vergrößert angezeigt werden, um Personen mit vermindertem Sehvermögen den Einkauf zu erleichtern.

Weitere Vorteile und Einzelheiten der Erfindung werden aus der Beschreibung der beigefügten Zeichnungen ersichtlich. Es zeigen:
- Figuren 1 bis 3: eine erste Ausführungsform des erfindungsgemäßen Transportwagens im Ladezustand,
- Figur 4: eine Illustration des Verstellens des erfindungsgemäßen Transportwagens vom Lade- in den Transportzustand
- Figuren 5 bis 7: weitere Ansichten der in den Figuren 1 bis 3 gezeigten Ausführungsformen des erfindungsgemäßen Transportwagens im Transportzustand, und
- Figur 8: schematische Seitenansichten einer weiteren Ausführungsform des erfindungsgemäßen Transportwagens.

Die Erfindung wird im Folgenden beispielhaft unter Bezug auf die bevorzugte Anwendung des Transportwagens beim Einkaufen von Waren beschrieben. Es wird jedoch betont, dass die Erfindung nicht auf die Anwendung beschränkt ist, sondern entsprechend auch beim Transport von Stückgütern oder Einzelgegenständen bei anderen Anwendungen anwendbar ist, wie z. B. beim Transport von Werkzeugen und Materialien von Handwerkern, Geräten von medizinischem Personal, Akten in Büros, mobilen Geräten und dgl..

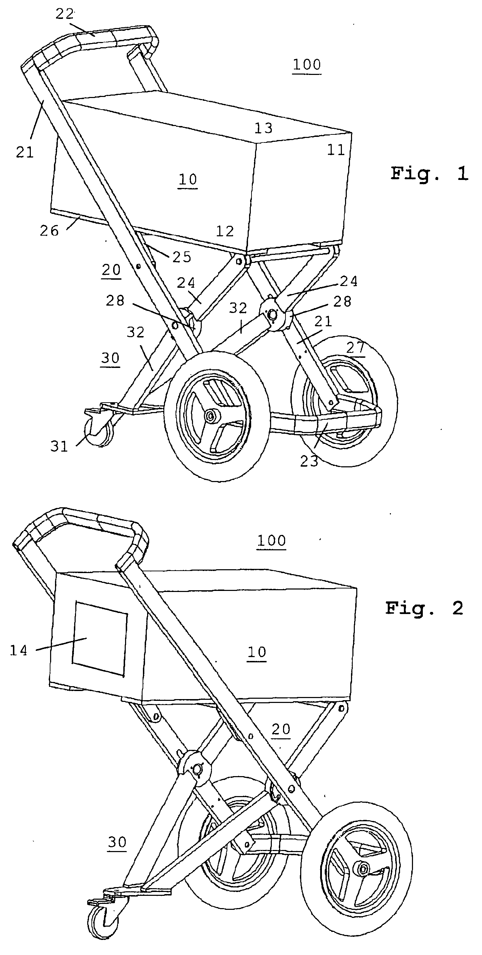

Eine erste Ausführungsform des erfindungsgemäßen Transportwagens ist in den Figuren 1 bis 7 illustriert, die den Transportwagen in verschiedenen Stellungen zeigen. Gemäß Figur 1 umfasst der Transportwagen 100 einen Träger 10, einen Rahmen 20 und einen Stützradausleger 30. Der Träger 10, der die Aufnahme des zu transportierenden Gutes oder Gegenstands darstellt, ist lediglich schematisch illustriert. Allgemein stellt der Träger 10 einen geschlossenen oder offenen Behälter, einen mehrteiligen Behälteraufbau, z. B. zur Aufnahme von Waren, oder ein Behältermodul dar. Der Träger 10 kann lösbar mit dem Rahmen verbunden sein.

Der Träger 10 kann im Ladezustand des Transportwagens gemäß Fig. 1 horizontal oder alternativ in Bezug auf die Fahrtrichtung nach vorn oder nach hinten geneigt angeordnet sein. Die um wenige Grad (z. B. 5°) geneigte Ausrichtung kann für eine stabile Anordnung von Transportgut im Träger 10 von Vorteil sein.

Das Volumen des Trägers 10 liegt vorzugsweise im Bereich von 50 bis 100 Litern, bspw. bei rd. 70 Litern. Der Innenraum des Trägers 10 kann durch Zusatztaschen, bspw. für Kleinartikel oder Gefriergut unterteilt sein. Vorteilhafterweise bildet eine starre Bodenfläche 11 des Trägers 10 eine Harassenfläche, die als Stütze für Getränkekisten verwendet werden kann. Entsprechend kann das Volumen des Trägers 10, wenn dieser lediglich als plattenförmige Aufnahme (ggf. mit einem umlaufenden Rand) benutzt wird, auch weniger als 50 Liter (bis zu 0 Liter) betragen.

Der Träger 10 kann mit einer elektronischen Steuereinrichtung 14 ausgestattet sein, die schematisch nur in Figur 2 illustriert ist. Die Steuereinrichtung umfasst vorzugsweise eine Anzeige (Display), einen Rechnerschaltkreis mit einem Speicher und einen Transponder zum Datenaustausch mit Waren im Träger 10 und zentralen Informationsquellen des Marktes. Es kann auch ein Kartenlesegerät zum Lesen einer Geld- oder Kreditkarte des Nutzers vorgesehen sein. Die Steuereinrichtung 14 kann wie dargestellt am Träger 10 und/oder am Griff 22 angebracht sein. Die Anbringung am Griff 22 besitzt den Vorteil, dass dieser für die Steuereinrichtung 14 einen schützenden Rahmen bildet.

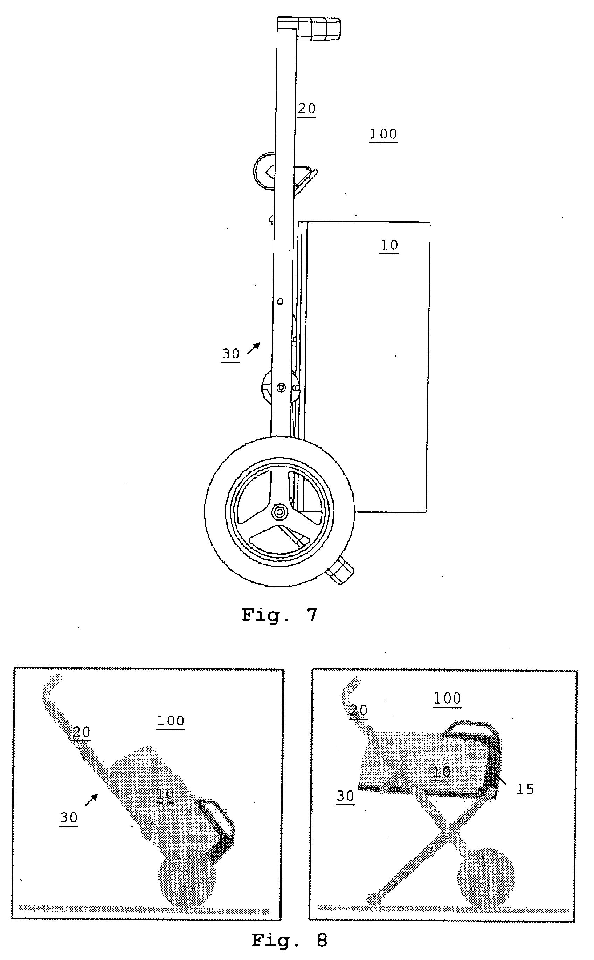

Der Rahmen 20 besitzt eine im Wesentlichen rechteckige, ebene Gestalt, die durch zwei langgestreckte Seitenarme 21 gebildet wird, deren Enden oben über einen Griff 22 und unten (bodenseitig) über einen Frontbogen 23 (unterer Holm) verbunden sind. Die Seitenarme 21 bestehen aus stabförmigen Bauelementen. Es sind z. B. Profilelemente, wie profilierte Schienen oder Hohlelemente vorgesehen. Die Seitenarme bestehen vorzugsweise, wie auch die anderen mechanischen Komponenten des Transportwagens, aus einem Leichtmetall, einer Leichtmetalllegierung, einem Kunststoff oder einem Verbundmaterial. Die Seitenarme 21 verlaufen parallel zu einander, sie spannen eine Bezugsebene (Rahmenebene) auf, die im Ladezustand einen vorbestimmten Winkel mit der horizontalen Bodenfläche bildet und im Transportzustand je nach der Greifhöhe des Nutzers gegenüber der Horizontalen verkippt und im freistehenden Zustand annähernd vertikal ausgerichtet ist. Der Griff 22 und der Frontbogen 23 können in der gleichen Bezugsebene wie die Seitenarme 21 oder vorzugsweise wie dargestellt aus der Bezugsebene herausragend angeordnet sein. Je nach dem gewünschten Fahrkomfort und der Funktionalität des Transportwagens 100 können der Griff 22 und/oder der Frontbogen 23 auch gegenüber den Seitenarmen 21 verschwenkbar und arretierbar sein. Beispielsweise kann der Frontbogen 23 eine Stütze für den freistehenden Transportwagen 100 bilden (siehe Fig. 7). Gemäß einer abgewandelten Ausführungsform des erfindungsgemäßen Transportwagens kann der Frontbogen 23 weggelassen und durch eine Achse zwischen den Rädern ersetzt werden.

An den Innenseiten der Seitenarme 21 sind vordere (24) und hintere (25) Plattformstützen angelenkt, an denen mindestens eine Plattform oder ein Rahmen befestigt ist. Beim dargestellten Ausführungsbeispiel sind zwei seitliche, langgestreckte Plattformen 26 jeweils zwischen den linken, vorderen und hinteren Plattformstützen und den rechten, vorderen und hinteren Plattformstützen nach Art von Trägerschienen angebracht, auf denen der Träger 10 ruht. Alternativ kann auch eine gemeinsame Plattform als integrales Bauteil vorgesehen sein. Die Enden der Plattformstützen 24, 25 sind an der Unterseite oder an den Seiten der Plattform 26 angelenkt.

An den unteren (bodenseitigen) Enden der Seitenarme 21 sind jeweils ein Vorderrad 27 befestigt, die Vorderräder 27 ruhen vorzugsweise in Kugellager, um die Beweglichkeit des Transportwagens 100 zu erleichtern.

Die hinteren Plattformstützen 25 bilden beidseitig jeweils einen zweiten Halterungspunkt für die Plattformen 26. Die hinteren Plattformstützen 25 sind ebenfalls an der Innenseite der Seitenarme 21 angelenkt und vom Ladezustand mit einer nach oben, zum Griff 22 gerichteten Ausrichtung in den Transportzustand mit einer nach unten, zum Frontbogen 23 gerichteten Ausrichtung verschwenkbar.

Auf der Rück- oder Unterseite des Rahmens 20 ist der Stützradausleger 30 vorgesehen. Er umfasst ein mit Nachlauf ausgestattetes, vorzugsweise frei in allen Richtungen drehbares Stütz- oder Rückrad 31, das über zwei Streben 32 am Rahmen 20 befestigt ist. Die Streben 32 sind an den Innenseiten der Seitenarme 21 angelenkt, so dass der Stützradausleger 30 von einer relativ zum Rahmen 20 ausgestellten Stützposition in eine Klappposition verschwenkbar ist. In dieser ist der Stützradausleger 30 an den Rahmen 20 angelegt und im Wesentlichen parallel zur Rahmenebene ausgerichtet. Da das Stützrad 31 relativ zur Bewegungsrichtung des Transportwagens 100 in der Mitte angeordnet ist, bilden die Streben 32 eine V-förmige, auseinanderlaufende Form.

Die Anordnung der Streben 32 und der vorderen Plattformstützen 24 an den Seitenarmen 21 erfolgt mit zwei Drehscheiben 28, die drehbar an den Seitenarmen 21 befestigt sind. Jeweils eine vordere Plattformstütze 24 und eine Strebe 32 bilden mit der zugehörigen Drehscheibe 28 ein starres Bauteil, so dass sich bei Drehung der Drehscheibe 28 zeitgleich der Stützradausleger 30 zwischen den Stütz- und Klapppositionen und der Träger 10 zwischen den Lade- und Transportzuständen des Transportwagens bewegen.

Gemäß abgewandelten Ausführungsformen kann aber auch eine getrennte Verschwenkbarkeit des Trägers 10 einerseits und des Stützradauslegers 30 andererseits vorgesehen sein. Des Weiteren kann auf die Drehscheiben verzichtet werden, wenn die Plattformstützen und Streben jeweils ein durchgehendes, gewinkeltes Bauteil bilden. Ferner können alternativ anstelle von einem Stützrad 31 auch zwei Stützräder vorgesehen sein, wobei dann die winkelige Ausrichtung der Streben 32 ggf. entfällt.

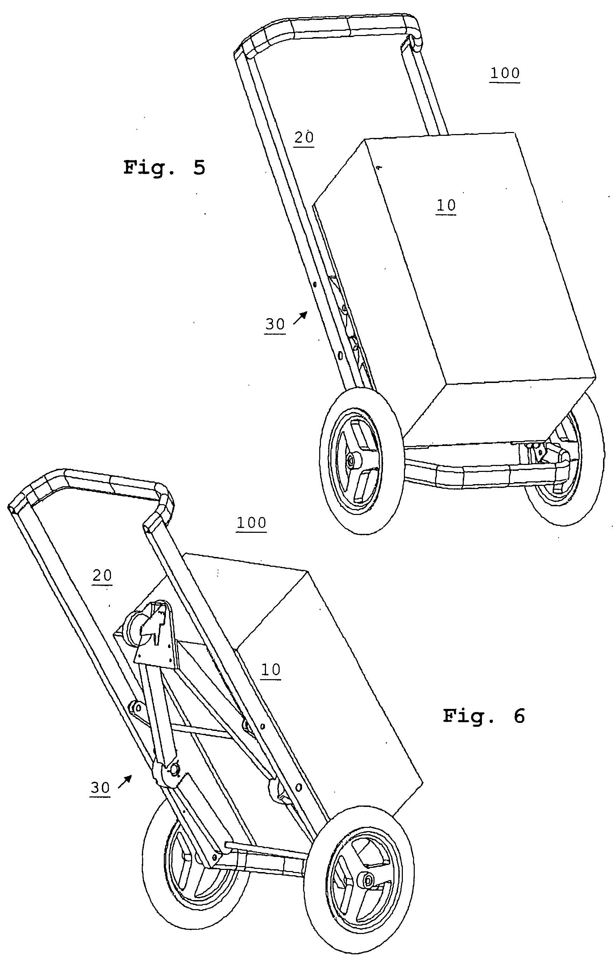

Die Figuren 1 bis 3 illustrieren den Ladezustand des Transportwagens 100 mit einem horizontal ausgerichteten Träger 10 und einem ausgestellten Stützradausleger 30. In diesem Zustand kann der Transportwagen beispielsweise durch einen Supermarkt gefahren werden, um Artikel aus Regalen in den Träger 10 zu übernehmen. Der Träger 10 ist bspw. ein Korb oder Kasten mit einer starren Bodenwand 11, starren oder zumindest teilweise flexiblen Seitenwänden 12 und einem starren oder flexiblen Deckel 13. Der Deckel 13 kann zum Beladen geöffnet (abgenommen, zurückgeschnallt, angehoben oder dgl.) werden. Gemäß einem besonderen Vorteil der Erfindung kann die Beladung des Trägers 10 möglichst schonend für die Waren erfolgen, indem bspw. Flaschen im vorderen und empfindliche Waren im hinteren Teil des Trägers 10 angeordnet werden. Vorteilhafterweise befinden sich dann im Ladezustand die schweren Waren stabil über dem Fahrwerk (Räder 27, 31) und im Transportzustand (siehe Figuren 5 und 6) möglichst tief über dem Boden.

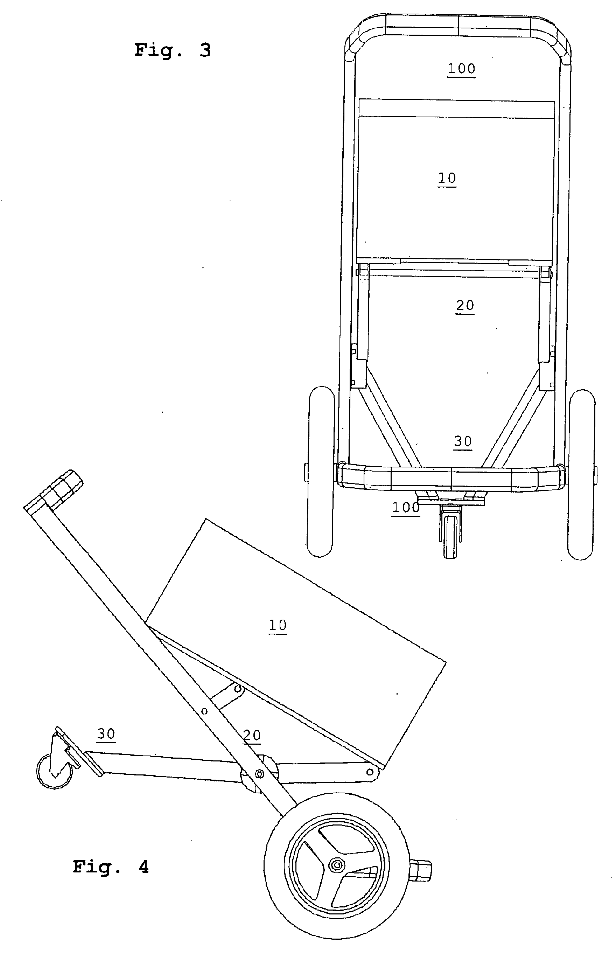

In Figur 3 ist der erfindungsgemäße Transportwagen 100 im Ladezustand von vorne gezeigt. Es ist erkennbar, dass der Träger 10, die Plattformen 26, die Plattformstützen 23, 24 und die Streben 32 innerhalb des Rahmens 20 angeordnet sind. Die Drehscheiben 28 ermöglichen die Einstellung eines Abstandes der Bauteile relativ zu den Innenseiten der Seitenarme 21, so dass ein unbeabsichtigtes Klemmen durch den Bediener vermieden werden kann.

Figur 4 illustriert einen Zwischenzustand beim Übergang vom Lade- zum Transportzustand des Transportwagens. Nach Freigabe einer Arretierung wird der Träger 10 nach unten geschwenkt. Dies kann durch Ziehen am Stützradausleger 30, einen Seil- oder Kabelzug oder durch einfache Schwerpunktverlagerung erfolgen. Der Träger 10 bewegt sich von einer stabilen, horizontalen Lage in eine weitere stabile, gekippte Lage. Im Transportzustand erfolgt eine Arretierung der Plattformstützen 24,25 und/oder Streben 32 am Rahmen, beispielsweise durch Druckknöpfe oder federnd angebrachte Riegel.

Gemäß einer bevorzugten Ausführungsform der Erfindung wird der Übergang vom Lade- zum Transportzustand manuell mit einer am Griff 22 angebrachten Betätigungseinrichtung (Druckknopf) ausgelöst. Die Drehscheiben 28 werden durch Drehgelenke mit einem inneren Schieber und einem Kulissenstein gebildet. Bei Betätigung des Druckknopfes wird über einen Kabelzug der Schieber ausgeklinkt, so dass der Träger 10 über einen Totpunkt hinweg in den Transportzustand überführt werden kann.

Der Transportzustand des erfindungsgemäßen Transportwagens 100 ist in den Figuren 5 und 6 illustriert. Der Träger 10 befindet sich in einem aus der Horizontalen verschwenkten Zustand. Die Plattformen 26 verlaufen im Wesentlichen parallel zur Rahmenebene. Durch das Umklappen der vorderen Plattformstützen 23 in die Rahmenebene sind gleichzeitig auch die Streben 32 mit dem Stützrad 31 in die Klappposition gebracht. In diesem Zustand kann der Transportwagen 100 wie ein herkömmlicher Caddie am Griff 22 erfasst und an seinen Bestimmungsort gezogen oder als Fahrradanhänger verwendet werden.

Zur Verwendung des Transportwagens 100 als Fahrradanhänger ist dieser mit einer Kupplungseinrichtung (nicht dargestellt) ausgestattet. Die Kupplungseinrichtung kann am oberen Griff (22, siehe Fig. 1) oder vorzugsweise am Stützradausleger 30 angebracht sein. Im letzteren Fall ist das Stützrad 31 relativ zu den Streben 32 nach oben schwenkbar, wobei die Kupplungseinrichtung zur Aufnahme einer Fahrraddeichsel an der Platte angebracht ist, die auch das Stützrad 31 trägt. Alternativ können die Streben 32 in sich abschwenkbar sein, so dass bei horizontaler Ausrichtung des Trägers 10 das Stützrad 31 mit unteren Abschnitten der Streben 32 vom Boden weggeschwenkt werden. In diesem Fall ist die Kupplungseinrichtung ebenfalls vorzugsweise an der Platte befestigt, die auch das Stützrad 31 trägt.

Alternativ ist eine senkrechte Aufstellung gemäß Figur 7 möglich, wobei der Frontbogen 23 als Stütze dient. Der Frontbogen 23 ragt soweit aus der Rahmenebene hervor, dass im aufrecht stehenden Zustand durch den beladenen Träger 10 kein Kippmoment gebildet wird, unter dessen Wirkung der Wagen umfallen könnte.

In Figur 8 ist eine weitere Ausführungsform des erfindungsgemäßen Transportwagens 100 schematisch im Transportzustand (linkes Teilbild) und im Ladezustand (rechtes Teilbild) illustriert. Bei dieser Gestaltung ist der Träger 10 ohne zusätzliche Plattformen direkt an den Enden der hinteren und vorderen Plattformstützen 24, 25 befestigt. Des Weiteren besteht der Träger 10 aus einer starren Schale 15, an der die Plattformstützen befestigt sind und die die Funktion des o. g. Bodenteils 11 übernimmt, und einer flexiblen Tasche 16, die nach oben oder seitlich geöffnet werden kann. Im linken Teilbild von Figur 8 ist analog zu Figur 7 gezeigt, dass vorteilhafterweise der Stützradausleger in der Klappposition nahezu vollständig durch den Rahmen 20 abgedeckt ist, so dass der Transportwagen im Transportzustand als Caddie ein ansprechendes Äußeres besitzt und wie herkömmliche Ziehwagen gut in anderen Fahrzeugen verstaut oder befestigt werden kann.

Zur Befestigung des Transportwagens können am Rahmen 20 zusätzliche Halteeinrichtungen, wie z. B. Gurtösen, Magnethalterungen oder Schlaufen vorgesehen sein. Mit den Halteeinrichtungen kann der Transportwagen bspw. in einem Kraftfahrzeug oder einem öffentlichen Verkehrsmittel fixiert werden.

Die in der bevorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Transportwagen (100), insbesondere zum Transport von Stückgut, mit einem Träger (10), der eine Stückgutaufnahme bildet, an einem fahrbaren Rahmen (20) angebracht ist und von einem Ladezustand, in dem der Träger (10) horizontal ausgerichtet ist, in einen Transportzustand verschwenkbar ist, in dem der Träger (10) aus der Horizontalen verkippt angeordnet ist, wobei der Rahmen (20) mit einem Stützradausleger (30) ausgestattet ist, der im Ladezustand des Transportwagens vom Rahmen (20) absteht und eine Stütze bildet und im Transportzustand des Transportwagens an den Rahmen (20) angelegt ist.

2. Transportwagen gemäß Anspruch 1, bei dem der Träger (10) an mindestens einer Plattform (26) angebracht ist, die an ihrer Unterseite verschwenkbare, vordere und hintere Plattformstützen (24, 25) aufweist, die an der Innenseite des Rahmens (20) angelenkt sind.

3. Transportwagen gemäß Anspruch 2, bei dem die Plattformstützen (24, 25) und der Stützradausleger (30) eine Synchronmechanik bilden, mit der der Träger (10) und der Stützradausleger (30) gleichzeitig verschwenkbar sind.

4. Transportwagen gemäß einem der vorhergehenden Ansprüche, bei dem der Träger (10) an seiner im Transportzustand unteren Seite ein starres Bodenteil (11) aufweist.

5. Transportwagen gemäß einem der vorhergehenden Ansprüche, bei dem der Träger (10) als Behältermodul vom Transportwagen abnehmbar ist.

6. Transportwagen gemäß einem der vorhergehenden Ansprüche, bei dem der Träger (10) oder ein Griff (22) des Transportwagens mit einer Steuereinrichtung (14) ausgestattet ist, die eine Anzeigeeinrichtung und eine Datenverarbeitungseinrichtung umfasst.

7. Transportwagen gemäß einem der vorhergehenden Ansprüche, bei dem am Rahmen Halteeinrichtungen zur lösbaren Fixierung des Transportwagens im Inneren eines Fahrzeugs oder öffentlichen Verkehrsmittels vorgesehen sind.

8. Transportwagen gemäß einem der vorhergehenden Ansprüche, bei dem die Räder (27) mit Kugellagern am Rahmen (20) angebracht sind.

9. Transportwagen gemäß einem der vorhergehenden Ansprüche, bei dem am Stützradausleger (30) oder am Griff (22) eine Kupplungseinrichtung für eine Fahrraddeichsel angebracht ist.

10. Verwendung eines Transportwagens gemäß einem der vorhergehenden Ansprüche zum Wareneinkauf im Einzelhandel oder als Fahrradanhänger.
